# EUROPEAN PATENT SPECIFICATION

(11) **EP 4 069 567 B1**
(45) Date of publication and mention of the grant of the patent: **21.08.2024**
(21) Application number: 20829647.5
(22) Date of filing: 02.12.2020
(51) Int. Cl.: B60W 40/09

(54) **A METHOD AND A SYSTEM TO ASSESS THE SAFETY OF A DRIVING STYLE OF A TERRESTRIAL VEHICLE**
VERFAHREN UND SYSTEM ZUR BEURTEILUNG DER SICHERHEIT EINES FAHRSTILS EINES LANDHRZEUGS
PROCÉDÉ ET SYSTÈME POUR ÉVALUER LA SÉCURITÉ D'UN STYLE DE CONDUITE D'UN VÉHICULE TERRESTRE

(30) Priority: 03.12.2019 IT 201900022863
(43) Date of publication of application: 12.10.2022
(73) Proprietor: IVECO S.P.A., 10156 Torino (IT)
(72) Inventor: ECHEVERRY, Julian, 10135 Torino (IT); TITLI, Andrea Pietro, 10138 Torino (IT)
(74) Representative: Studio Torta S.p.A.
(86) International application number: PCT/IB2020/061385
(87) International publication number: WO 2021/111331

(56) References cited:
- EP-A1- 3 168 102
- WO-A1-2015/061077
- US-A1- 2013 116 856

## Description

### TECHNICAL FIELD

The invention relates to a method and a system to assess the safety of a driving style of a terrestrial vehicle, so as to give drivers a feedback concerning the safety of their driving style, as well as correct bad habits of the drivers themselves and/or help them develop new advantageous habits through proper instructions.

### KNOWN STATE OF THE ART

As known, good and bad driving habits in terrestrial vehicles significantly affect the safety of drivers as well as of people and objects surrounding the vehicles.

The safety issue is deemed to be extremely important in the terrestrial vehicle production and selling industry, especially for terrestrial vehicles designed for the transportation of hazardous good, such as goods containing explosive, inflammable or polluting substances.

Therefore, terrestrial vehicle drivers need to be supported so as to have the chance of improving, in an aware manner, the safety of their driving style.

Document WO 2015/061077 A1 is generally directed to systems and methods for monitoring and assessing driver behaviour.

Document US 2013/116856 relates to a method for operating a vehicle system of a motor vehicle and motor vehicle.

Document EP 3 168 102 A1 refers to the field of vehicular feedback methods and systems for correcting bad driving habits.

The object of the invention is to fulfil the need discussed above.

### SUMMARY OF THE INVENTION

The aforesaid object is reached by a method and a system to assess the safety of a driving style of a terrestrial vehicle, as claimed in the appended claims.

The dependent claims define particular embodiments of the invention.

Furthermore, terms such as "second" component, "third" component and the like do no imply the presence of a "first" or of a "second" component, etc.. These terms are used for merely explaining purposes and should not be interpreted as limiting.

### BRIEF DESCRIPTION OF THE DRAWINGS

The invention will be best understood upon perusal of the following detailed description of embodiments thereof, which are provided by way of non-limiting example, with reference to the accompanying drawings, wherein:
- figure 1 shows a diagram representing, in a simplified manner, the components of a vehicle comprising a system according to the invention;
- figure 2 is a block diagram showing steps of a method according to the invention; and
- figure 3 is a block diagram showing further steps of the method of figure 2.

### DETAILED DESCRIPTION OF THE INVENTION

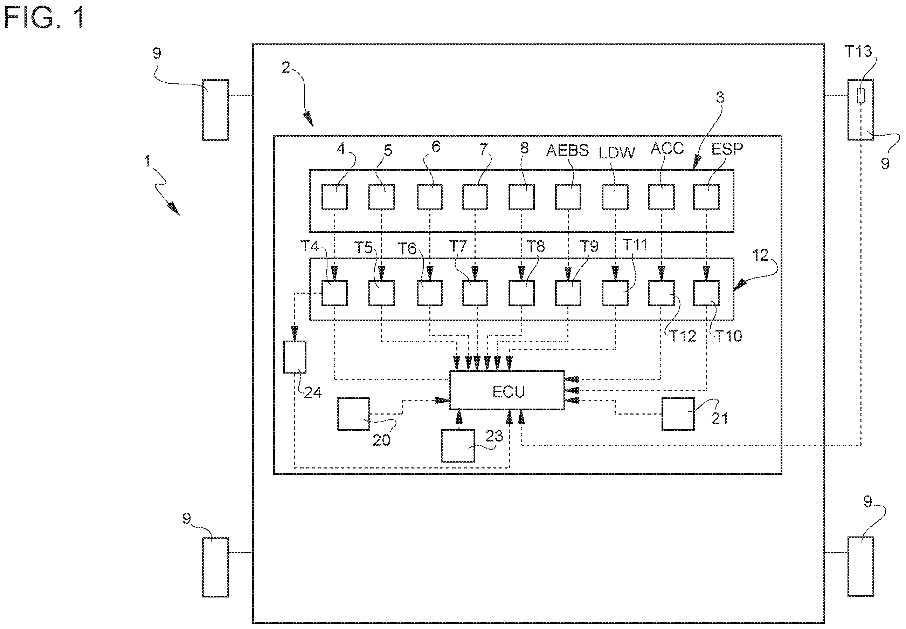

With reference to figure 1, reference number 1 indicates a vehicle where there is installed a system 2 to assess the safety of a driving style of said vehicle 1.

The vehicle 1 comprises a plurality of distinct devices 3, whose operation or manual activation affects the driving safety.

More specifically, the devices 3 include one or more devices from among:
- a steering device 4 comprising, in particular, a steering wheel;
- a braking device 5 comprising, in particular, a brake pedal;
- an acceleration device 6 comprising, in particular, an accelerator pedal;
- a stationary braking device 7 comprising, in particular, a hand brake lever and a ratchet;
- a safety distance detection device 8;
- an autonomous emergency braking device AEBS;
- an electronic stability control device ESP;
- a lane departure warning system LDW;
- an adaptive cruise control device ACC; and
- a plurality of tyres 9.

All the devices 3 listed above are widely known in the industry and are commonly used in a large number of known vehicles. Therefore, a detailed description of the functions and of the components of the devices 3 will be left out for brevity reasons.

Some of the devices 3, such as the ones indicated by reference numbers 4, 5, 6 and 7 in figure 1, can completely be operated in a manual manner by the driver of the vehicle 1. Similarly, the maintenance of the tyres 9, which includes inflating or replacing the tyres 9, takes place in a manual manner. On the other hand, the other devices 3 are electronic and have a substantially autonomous operation, conveniently except for the possibility of turning them on or off in a manual manner or of setting some operating parameters by hand.

The system 2 comprises a plurality of detection apparatuses 12, for example transducers, which are configured to detect respective quantities, which are each indicative of or are associated with a corresponding operating or use condition of one of the devices 3.

Each one of the detection apparatuses 12 could detect several quantities indicative of the operating or use condition of a corresponding device 3.

More in detail, the detection apparatuses 12 comprise a first transducer T4, which is configured to detect a first quantity indicative of a first operating or use condition of the steering device 4. The first operating condition specifically is indicative of the safety with which the steering device 4 operates or is activated, in particular in a manual manner by the driver. More precisely, the first quantity could be indicative of the operating vehemence and/or speed; for example, the quantity could be the lateral acceleration of the vehicle 1 or the angular acceleration of the steering wheel. Indeed, a high lateral acceleration of the vehicle 1 or angular acceleration of the steering wheel, with the vehicle 1 moving, is indicative of a poor safety associated with the operation or use, in particular manual operation or use, of the steering device 4.

Furthermore, the detection apparatuses 12 comprise a second transducer T5, which is configured to detect a second quantity indicative of a second operating or use condition of the braking device 5, specifically indicative, in turn, of the safety with which the latter operates or is activated, in particular in a manual manner by the driver. More precisely, the second quantity could be indicative of the operating vehemence and/or speed; for example, the second quantity could be the deceleration of the vehicle 1 along its moving direction or the angular acceleration of the brake pedal. Indeed, a high longitudinal deceleration of the vehicle 1 or angular acceleration of the brake pedal is indicative of a poor safety associated with the operation or use, in particular manual operation or use, of the braking device 5.

Furthermore, the detection apparatuses 12 comprise a third transducer T6, which is configured to detect a third quantity indicative of a third operating or use condition of the acceleration device 6, specifically indicative, in turn, of the safety with which the latter operates or is activated, in particular in a manual manner by the driver. More precisely, the third quantity could be indicative of the operating vehemence and/or speed; for example, the third quantity could be the acceleration of the vehicle 1 along its moving direction or the angular acceleration of the accelerator pedal. Indeed, a high longitudinal acceleration of the vehicle 1 or angular acceleration of the accelerator pedal is indicative of a poor safety associated with the operation or use, specifically manual operation or use, of the acceleration device 6.

Furthermore, the detection apparatuses 12 comprise a fourth detection apparatus T7, which is configured to detect a fourth quantity indicative of a fourth operating or use condition of the stationary braking device 7. The fourth quantity specifically is indicative of the presence of an activation or deactivation state of the stationary braking device 7, in which the latter applies a zero or non-zero braking torque, respectively, to the tyres 9, while the vehicle 1 is moving. For example, the fourth quantity could be a product between a (Boolean) logic variable, which is equal to one, if the stationary braking device 7 is in the activation state, or equal to zero vice versa, and the current speed of the vehicle 1.

In this specific case, in order to detect the fourth quantity, the detection apparatus T7 detects a further quantity merely indicative of the presence of the activation or deactivation state, for example the position of the hand brake lever or a torque exerted upon the ratchet, as well as the current speed of the vehicle 1, so as to indirectly provide the detection of the fourth quantity.

A high value of the fourth quantity is indicative of a condition of poor safety of the driving style, since this high value indicates that the stationary braking device 7 is in the activation state, namely operating, when the vehicle 1 is moving.

Furthermore, the detection apparatuses 12 comprise a fifth detection apparatus T8, which is configured to detect a fifth quantity indicative of a fifth operating or use condition of the safety distance detection device 8, specifically indicative, in turn, of the safety of the driving style of the driver. More precisely, the fifth quantity could be indicative of the longitudinal distance between the vehicle 1 and a further vehicle preceding the vehicle 1; for example, the fifth quantity could be a collision time between the vehicle 1 and the further vehicle, assuming that they both keep moving in a constant manner with their respective current speeds.

In this specific case, in order to detect the fifth quantity, the detection apparatus T8 detects the longitudinal distance between the vehicle 1 and the further vehicle, as well as their current speeds, so as to indirectly provide the detection of the fifth quantity. The ways in which to obtain the fifth quantity in this specific case are widely known or anyway within reach of a person skilled in the art, so that they are not further described herein.

The fifth quantity is indicative of the fifth operating condition, as the safety distance detection device 8 gets into an alarm mode, in which its warns the driver of a collision risk, based on the fifth quantity. The alarm condition naturally corresponds to a condition of poor safety of the driving style of the driver.

Furthermore, the detection apparatuses 12 comprise a sixth transducer T9, which is configured to detect a sixth quantity indicative of a sixth operating or use condition of the autonomous emergency braking device AEBS, specifically indicative, in turn, of the safety of the driving style of the driver. More precisely, the sixth quantity is indicative of the presence of an intervention or inactivity state of the autonomous emergency braking device AEBS, in which the latter applies a zero or non-zero braking torque, respectively, to the tyres 9.

Furthermore, the sixth quantity preferably is indicative of a manual activation or deactivation state of the autonomous emergency braking device AEBS, which, for example, can be activated so as to get into intervention mode or deactivated so as to always remain in the inactivity state, by means of a dedicated manual control (not shown) which is part of the vehicle 1.

For example, the sixth quantity could a control voltage of the autonomous emergency braking device AEBS. The presence of the intervention state naturally corresponds to a condition of poor safety of the driving style of the driver. Similarly, the presence of the deactivation state corresponds to a condition of poor safety of the driving style of the driver.

Similarly, the detection apparatuses 12 comprise a seventh transducer T10, an eighth transducer T11 and a ninth transducer T12, which are configured to detect a seventh quantity, an eighth quantity and a ninth quantity, respectively, which are indicative of a seventh, eighth and ninth operating or use condition, respectively, of the electronic stability control device ESP, of the lane departure warning device LDW and of the adaptive cruise control device ACC.

The seventh quantity is indicative of the presence of an intervention or inactivity state of the electronic stability control device ESP, in which the latter helps or does not help, respectively, drive the vehicle 1. Like the sixth quantity, the seventh quantity could be a control voltage and could also be indicative of a state of manual activation or deactivation of the electronic stability control device ESP, by means of a further manual control (not shown) of the vehicle 1. In this case, again, the presence of the intervention state and of the deactivation state corresponds to a condition of poor safety of the driving style of the driver.

The eighth quantity is similar to the seventh quantity, since it could be a control voltage and since the lane departure warning device LDW has a relative intervention state and a relative inactivity state, in which it warns the driver of a lane departure of the vehicle 1 and remains silent, respectively. Furthermore, the lane departure warning device can also have a relative state of manual activation or deactivation, by means of a further control (not shown) of the vehicle 1. The presence of the intervention state and of the deactivation state corresponds, once again, to a condition of poor safety of the driving style of the driver.

The ninth quantity is similar to the seventh and eighth quantities, according to the same logics described above. Indeed, the adaptive cruise control device ACC has a relative intervention state, in which the speed of the vehicle 1 is set in an autonomous manner, and a relative inactivity state, in which the driver is free to control the speed of the vehicle 1. However, in the last case, the intervention state corresponds to a high safety situation. Moreover, the adaptive cruise control device ACC can have - as well - a state of manual actuation or deactivation, by means of a further manual control (not shown). The deactivation state evidently corresponds to a condition of poor safety of the driving style of the driver.

Furthermore, the detection apparatuses 12 comprise a tenth transducer T13, which is configured to detect a tenth quantity indicative of a tenth operating or use condition of one of the tyres 9, specifically indicative, in turn, of the safety with which the latter operates. More precisely, the tenth quantity could be indicative of the condition of inflation or wear of at least one of the tyres 9; for example, the tenth quantity could be the pressure or the wear of the tyre 9. Indeed, an unsuitable pressure of the tyres 9 or an advanced wear thereof is indicative of a poor safety associated with the operation or use of the tyres 9.

With reference to figure 1, again, the system 2 comprises a control unit ECU, which is connected to the detection apparatuses 12 and is configured to determine, at least during a first operating phase of the vehicle 1, in which the vehicle 1 is moving and the detection apparatuses 12 work under "standard" operating conditions, a plurality of partial scores, which respectively are a function of respective quantities detected by the detection apparatuses 12.

By "standard" we mean an operating condition without faults that can affect the reliability of the detections, as per design of the detection apparatuses 12.

The links or relations between scores and quantities are predetermined and stored in the control unit ECU. In other words, the control unit ECU stores a plurality of functions associating the quantities with the scores, which express corresponding degrees of safety of the operating or use conditions.

These links or relations can comprise, for example, respective association scales to associate each detected quantity with one of at least two distinct conventional safety degrees (for instance, a good and a poor safety), namely continuous scales of association of the degree of safety.

The control unit ECU specifically assigns, to the operating conditions from the first to the tenth one described above, corresponding partial scores based on the detected quantities from the first to the tenth one described above. Practically, ten distinct partial scores are determined and assigned to the use or to the operation of the ten devices 3 described above. More precisely, some partial scores, in particular those that are a function of the quantities from the first to the fourth one, relate to the manual use or handling mode of the corresponding devices 3, which can be operated or handled by drivers in a completely manual manner. Some partial scores, in particular those that are a function of the quantities from the fifth to the ninth one, relate to the autonomous or substantially autonomous operation of the corresponding devices 3.

Hence, each one of the partial scores corresponds to or expresses a degree or level of safety, which relates to one of the operating or use conditions of the devices 3, which, in turn, is associated with one of the detected quantities.

In fact, as mentioned above, the operating conditions and, hence, the quantities are indicative of the safety with which the respective devices 3 are operated or work, in relation to the driving style of the driver.

To be clear, by safety we mean a direct measure of the greater or smaller probability of occurrence of road accidents; the concept of safety, herein, is not linked to environmental aspects (emissions, pollutions) or aspects concerning the performances of the vehicle 1.

For example, the greater the first quantity, the more the safety of use of the steering device 4 decreases, so that, consequently, the control unit ECU assigns to the first operating condition a relative first partial score, which is indicative of or expresses a level of safety that is lower the higher the first quantity is. A similar reasoning also applies, mutatis mutandis, to the quantities from the second to the fourth one and to the operating conditions from the second to the fourth one.

By way of further example, if the fifth quantity (namely, specifically, a collision time) is indicative of the fact that the driver has a reaction time that is barely sufficient to avoid a collision, the safety distance detection device 8 operates in the alarm condition, namely in a poor safety condition, due to the driving style of the driver. Then, the control unit ECU assigns to the fifth operating condition a relative fifth partial score, which is indicative of a level of safety that is lower the lower the fifth quantity is.

Furthermore, for example, when the sixth quantity (namely, specifically, a control voltage) is indicative of a state of intervention of the autonomous emergency braking device AEBS, the latter acts so as to remove an existing condition of lack of safety caused by the driving style of the driver. Hence, every time the sixth quantity indicates the state of intervention of the autonomous emergency braking device AEBS, the control unit ECU assigns to the sixth operating condition a relative partial score indicative of a lower and lower safety level.

Owing to the above, the partial scores can be continuous functions of the quantities, which, for instance, is what happens, in particular, with the quantities from the first to the fifth one, or piecewise-defined functions, like in the case of the sixth quantity. Indeed, the sixth partial score is assigned depending on the number of times in which the sixth quantity indicates the state of intervention of the autonomous emergency braking device AEBS.

The same reasoning made for the sixth quantity and the sixth operating condition also applies, mutatis mutandis, to the quantities from the seventh to the eighth one and to the operating conditions from the seventh to the eighth one.

Furthermore, for example, when the ninth quantity is indicative of a state of intervention of the adaptive cruise control device ACC, the latter operates so as to increase the driving safety of the vehicle 1, since it takes the place of the driver by autonomously setting a speed. Vice versa, when the ninth quantity is indicative of a state of inactivity of the adaptive cruise control device ACC, the driving safety level is lower. For example, the control unit ECU assigns to the ninth operating condition a respective ninth partial score based on the amount of time in which the ninth quantity is indicative of the inactivity state; the greater the amount of time, the more the ninth partial score is indicative of a low safety level. Hence, the ninth partial score is a function of a function of the ninth quantity.

Something similar happens with the tenth quantity and the tenth operating condition, in which the control unit ECU assigns to the tenth operating condition a relative tenth partial score based on an amount of time in which the tenth quantity is indicative of an insufficient pressure of one of the tyres 9; the greater the amount of time, the more the tenth partial score is indicative of a low safety level.

The partial scores preferably increase as the safety level increases. For example, each one of the partial scores is expressed as safety percentage. The higher the percentage, the safer the driving style.

Advantageously, during the first operating phase, the safety of the driving style is assessed based on each partial score determined by the control unit ECU. The assessment can be carried out in terms of signalling of the partial scores and/or of specific messages or warnings based on the partial scores. The signalling can occur from the control unit ECU to the driver or to third parties, for example an insurance company or a delivery company, for which the driver works with the vehicle 1.

In addition, the control unit ECU could be configured to also determine an overall score depending on the partial scores determined during the first operating phase. For example, the control unit ECU calculates the overall score by carrying out a weighted mean, in particular, based on the stored weights, of the partial scores. A further assessment of the safety of the driving style is carried out based on the overall score, in ways that are similar to the ones already described above for the partial scores.

Alternatively, the control unit ECU could calculate the overall score by carrying out an arithmetic mean of the partial scores.

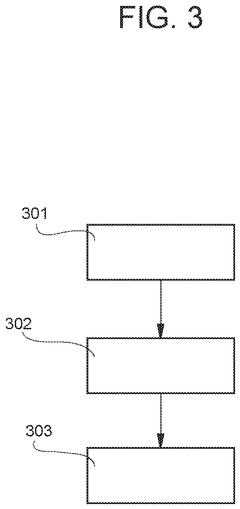

Preferably, at least one of the partial scores is determined by the control unit ECU according to the steps shown in figure 3.

In a first optional step 301, which corresponds to the first operating phase of the vehicle 1, the control unit ECU arbitrarily sets the partial score to a value, in particular a maximum value, more in particular amounting to 1000.

In a second step 302, the control unit ECU determines whether the quantity indicative of the operating condition to which the partial score is assigned satisfies a relationship with a threshold. More precisely, the control unit ECU determines whether the quantity exceeds the threshold, so that the relationship is satisfied.

At this point, in a third step 303, the control unit ECU updates the partial score after the relationship has been satisfied, so that the first updated score is indicative of a decrease in the safety level.

Practically, the relationship is chosen in such a way that a fulfilment thereof implies a decrease in the level of the driving safety of the vehicle 1.

Specifically, the control unto ECU lowers the value of the partial score when the relationship is satisfied, namely when the quantity exceeds the threshold, according to a criterion stored in the control unit ECU.

In particular, the control unit ECU updates the partial score by applying a correction coefficient to the latter; for example, the control unit ECU multiplies the partial score by a coefficient that is smaller than one, namely it subtracts a coefficient that is smaller or greater than one from the partial score.

For example, in the case of the first operating condition, the control unit ECU checks for the moment in which the first quantity, for example the lateral acceleration of the vehicle 1, exceeds a first threshold stored in the control unit ECU, for example equal to 3 m/s^2. Then, as soon as the first threshold is exceeded, the control unit ECU multiplies the correction coefficient, which is smaller than one, by the current value of the first partial score, for example still amounting to 1000.

The same considerations also apply, mutatis mutandis, to the operating conditions from the second to the fourth one.

As far as the sixth operating condition is concerned, the control unit ECU checks for the moment in which the sixth quantity, namely a control voltage, in particular, exceeds a sixth threshold such that the emergency braking device 9 gets into intervention mode. Then, as soon as the sixth threshold is exceeded, the control unit ECU multiplies the correction coefficient, which is smaller than one, by the current value of the sixth partial score, for example still amounting to 1000.

The same considerations also apply, mutatis mutandis, to the operating conditions from the seventh to the eighth one.

More preferably, at least one of the partial scores is updated by the control unit based on a time elapsed from the moment in which the relationship is satisfied, in particular up to the moment in which the relationship is no longer satisfied.

The update carried out is such that the longer the time elapsed, the stronger the decrease in the safety level indicated by the partial score.

For example, in the case of the fifth operating condition, the control unit ECU checks for the moment in which the fifth quantity, for example the collision time, is below a fifth threshold stored in the control unit ECU, for example equal to 3 s. Then, as soon as the moment occurs, the control unit ECU estimates, by means of an internal clock of its, the time elapsed from that moment up to the new moment in which the fifth threshold is exceeded again. At this point, the control unit ECU multiplies the correction coefficient, which is smaller than one and is a function of the time elapsed, by the current value of the fifth partial score, for example still amounting to 1000.

In particular, the longer the time elapsed, the smaller the correction coefficient, so that the fifth partial score decreases as time elapses.

Similar considerations also apply to the case of the ninth operating condition. The ninth quantity is indicative of the state of intervention or inactivity of the adaptive cruise control device ACC. In particular, the adaptive cruise control device ACC gets into inactivity mode when the ninth quantity, for example a control voltage, is below a ninth threshold. The control unit ECU checks for the moment in which this happens and estimates the time elapsed up to the moment in which the ninth threshold is exceeded, namely in which the adaptive cruise control device ACC gets into intervention mode. Here, the control unit ECU multiplies the ninth partial score by a correction coefficient smaller than one, which gets smaller as the time elapsed increases.

Furthermore, similar considerations apply to the tenth operating conditions. The control unit ECU checks for the moment in which the tenth quantity, namely the pressure of one of the tyres 9, gets below a tenth threshold. Here, the control unit ECU estimates the time elapsed from that moment until the maintenance of the tyres 9 is carried out, namely until the pressure exceeds the tenth threshold again. In the meantime, the control unit negatively updates the tenth partial score, for example at regular time intervals. With every negative update, the tenth partial score drops more drastically.

Some partial scores, in particular those form the first to the third one plus the seventh one, are conveniently determined based on the distance travelled by the vehicle 1 along its forward direction. For this reason, the system 2 is provided with a further detection apparatus 20, which is configured to detect one or more further quantities indicative of the distance travelled by the vehicle 1.

For example, the detection apparatus 20 can be a GPS sensor or odometry sensors.

More in detail, the correction coefficients applied to the partial scores affect the partial scores in a decreasing manner as the travelled distance increases. For example, the multiplying coefficients of the partial scores from the first to the third one and of the seventh partial score comprise a constant coefficient divided by the travelled distance.

Actually, the greater the travelled distance, the greater the chance of negative effects in terms of driving safety. This means that a greater tolerance towards the driver is appropriate.

Some partial scores, in particular those form the fourth to the eighth one, are preferably determined based on the speed of the vehicle 1 along its forward direction. For this reason, the system 2 is provided with a further detection apparatus 21, for example a speedometer, which is configured to detect one or more quantities indicative of the speed of the vehicle 1.

More specifically, as already mentioned above, the fourth quantity is directly influenced by the speed of the vehicle 1. This is reasonable, since the safety of the driving style significantly decreases as the speed of the vehicle 1 increases, when the stationary braking device 7 is in the activation state. Therefore, the fourth partial score is decreased by the control unit ECU if the speed of the vehicle 1 increases when the stationary braking device 7 is in the activation state.

Furthermore, the correction coefficient applied to the eighth partial score should appropriately take into account the current speed of the vehicle 1. Indeed, a frequent state of intervention of the lane departure warning device LDW, when the speed of the vehicle 1 is relatively low, indicates that the vehicle 1 is driving on a narrow street rather than indicating a bad habit of the driver. Therefore, the correction coefficient is modified in such a way that the eighth partial score increases as the vehicle of the speed 1 decreases. For example, if the correction coefficient is a multiplying coefficient smaller than one, the coefficient gets closer to one as the speed of the vehicle 1 decreases.

The determination of the eighth partial score could even be disabled temporarily by the control unit ECU in case the speed of the vehicle 1 is below a threshold stored in the control unit ECU. Hence, the eighth partial score would not be involved in the calculation of the overall score and in the assessment of the driving style of the driver, in a temporary manner.

Some partial scores, in particular the seventh one, are conveniently determined based on the condition of the road travelled by the vehicle 1.

To be clear, by "road condition" we mean conditions of presence of ice on the road surface, conditions of slippery road and other conditions in which a state of intervention of the electronic stability control device ESP is appropriate.

Therefore, the system 2 is provided with a further detection apparatus 23, which is configured to detect one or more further quantities indicative of a condition of the road travelled by the vehicle. For example, the detection apparatus 23 comprises one or more sensors from among an outer temperature sensor, a humidity sensor, a rain sensor, an accelerometer.

Road conditions are independent of the driving style of the driver; therefore, the control unit ECU could increase the value of the seventh partial score in case said road conditions lead to a increased frequency of states of intervention of the electronic stability control device ESP.

The determination of the seventh partial score could be even disabled temporarily by the control unit ECU in case of adverse road conditions, for example in case of presence of ice on the road surface. Hence, the seventh partial score would not be involved in the calculation of the overall score and in the assessment of the driving style of the driver, in a temporary manner.

Furthermore, the system 2 comprises a plurality of diagnostic apparatuses 24 (only one of them being shown, for the sake of simplicity), which are connected to the detection apparatuses 12 and are each configured to determine a fault or malfunction condition of the relative detection apparatus 12. The presence of malfunction conditions in a portion of the detection apparatuses 12 defines a second operating phase of the vehicle 1, which is distinct from the first operating phase and in which the detection of the quantities normally detected by said first portion is impossible or anyway likely to produce unreliable information.

To be clear, the term "normally" relates to the first operating phase, in which all detection apparatuses 12 operate under standard operating conditions.

During the second operating phase, the control unit ECU is configured to detect the quantities normally detected by the remaining detection apparatuses 12 not belonging to the first portion, which define a second portion of the detection apparatuses 12.

Moreover, depending on these last quantities detected during the second operating phase, the control unit ECU determines the relative partial scores, like in the first operating phase.

On the other hand, the quantities normally detected by the first portion of the detection apparatuses 12 are conveniently no longer detected during the second operating phase and the partial scores are not determined either.

In other words, the determination of some partial scores, which are a function of the quantities that cannot be detected or, anyway, cannot be detected with enough reliability, is temporarily disabled.

The partial scores that are not determined are not involved in the determination of the overalls score either. Actually, the control unit ECU is configured to calculate the overall score based on the sole partial scores determined during the second operating phase. In this way, possible faults or malfunctions of the detection apparatuses 12 do not affect the reliability of the overall score determined by the control unit ECU.

Therefore, during the second operating phase, the quantities divide themselves into a first portion of quantities that can be detected with reliability and a second portion of quantities that cannot be detected or can be detected with a scarce reliability. The sole quantities of the first portion are taken into consideration for the determination of the partial scores and of the overall score.

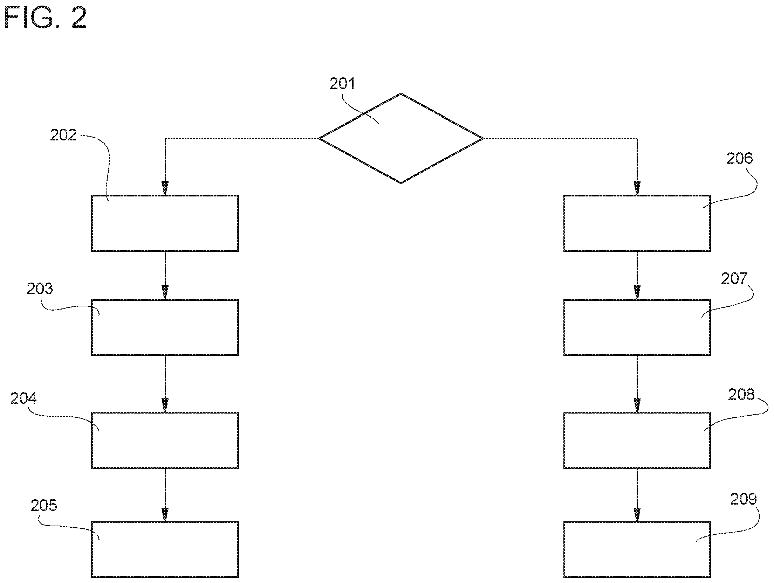

The operation of the system 2 will be described below with reference to figure 2.

When the diagnostic apparatuses 24 establish that all detection apparatuses 12 work correctly (left output of block 201), the vehicle 1 operates in the first operating phase. Then, the detection apparatuses 12 detect the respective quantities and deliver them to the input of the control unit ECU (block 202). Here, the control unit ECU determines all partial scores depending on the quantities received at the input (block 203). At this point, the control unit ECU determines an overall score depending on the partial scores determined (block 204). Then, the control unit ECU signals to the driver or to third parties the partial scores and the overall score or sends warning messages based on the partial scores and/or on the overalls core (block 205).

Vice versa, when some diagnostic apparatuses 24 establish that the respective detection apparatuses 12 suffer from a fault or a malfunction, the vehicle 1 operates in the second operating phase (right output of block 201). The remaining detection apparatuses 12, which work correctly, detect the respective quantities and deliver them to the input of the control unit ECU (block 206). Then, the control unit ECU basically carries out the same operations of blocks 203, 204, 205, leaving out a portion of the quantities that can actually be detected and a corresponding portion of the scores that can be determined during the first operating phase of the vehicle 1 (corresponding blocks 207, 208, 209) .

Owing to the above, the advantages of the system 2 and of the method according to the invention are evident.

The determined partial scores allow for an objective assessment of the driving style of the driver and can be used as an aid for the driver for his/her constant driving improvement or can be used for an assessment of the driver.

Finally, the system 2 and the method according to the invention can clearly be subjected to changes and variants, which, though, do not go beyond the scope of protection set forth in the appended claims.

In particular, the number of the detected quantities, of the determined partial scores and of the devices 3 could be different from the one described and discussed herein.

Furthermore, the thresholds described herein can be updated in any moment, for example based on a new adjustment of the system 2.

Finally, for a mere clarity purpose, the term "function" indicates one or more operations suited to associate an element of a set with an element of another set.

## Claims

1. A method to assess the safety of a driving style of a terrestrial vehicle (1), the method comprising the steps of:
- detecting (202), during a first operating phase of the vehicle (1), at least a quantity associated with an operating condition of a device (3) of the vehicle (1);
- establishing a function that associates said quantity with a score expressing a degree of safety of the operating condition; and
- determining (203), during said first operating phase, the score on the basis of at least the detected quantity, through said function;
the safety of the driving style being assessed (205), during said first operating phase, on the basis of the determined score,
wherein:
- said step of detecting (202) comprises detecting a plurality of quantities respectively associated with operating conditions of corresponding devices (3) of the vehicle;
- said step of establishing comprises establishing a plurality of functions that respectively associate said quantities with respective scores expressing corresponding degrees of safety of the associated operating conditions; and
- said step of determining (203) comprises determining the scores on the basis of the respective detected quantities, through the corresponding said functions;
wherein the safety of the driving style is assessed, during said first operating phase, on the basis of each of the determined scores and/or on the basis of an overall score determined as a function of the determined scores, the method being **characterised in that** said quantities are defined by a first portion and a second portion of said quantities; the method furthermore comprising the steps of:
- determining (201) the existence of a second operating phase of the vehicle (1), different from said first operating phase, and in which detecting said second portion produces unreliable information;
- detecting (206), during said second operating phase, said first portion of said quantities;
- determining (207), during said second operating phase, a portion of said scores on the basis of the respective quantities of said first portion through the corresponding functions;
the safety of the driving style being assessed (209), during the second operating phase, on the basis of each of the determined scores and/or on the basis of a further overall score determined as a function of the determined scores.

2. The method according to claim 1, wherein said function includes the operations of:
- assigning a first base value to the score;
- determining (301) whether the detected quantity satisfies a first relationship with a first threshold; and
- updating (302) the score to a second value after the first relationship has been satisfied;
the second value expressing a lower degree of safety with respect to the one expressed by the first base value.

3. The method according to claim 1, wherein said function includes the operations of:
- assigning a first base value to the score;
- determining (301) whether the detected quantity satisfies a second relationship with a second threshold;
- determining information relative to a time elapsed from the moment in which said second relationship is satisfied; and
- updating (302) the score to a second base value based on said information;
the second value expressing a degree of safety as much lower, with respect to the one expressed by the first base value, as much longer said elapsed time is.

4. The method according to claim 3, wherein said time elapses up to the moment in which said second relationship is no longer satisfied.

5. The method according to any one of the preceding claims, further comprising the step of detecting a further quantity indicative of the speed of the vehicle (1), wherein the score is also determined on the basis of said further detected quantity.

6. The method according to any one of the preceding claims, further comprising the step of detecting one or more further quantities indicative of a condition of the road travelled by the vehicle (1), wherein the score is also determined on the basis of the one or more further detected quantities.

7. The method according to any one of the preceding claims, wherein said overall score is an average of said scores.

8. The method according to any one of the preceding claims, wherein said device (3) includes one or more combinations from among:
- a steering device (4);
- a braking device (5);
- an acceleration device (6);
- a stationary braking device (7);
- a safety distance detection device (8);
- an autonomous emergency braking device (AEBS);
- an electronic stability control device (ESP);
- a lane departure warning system (LDW);
- an adaptive cruise control device (ACC); and
- a tyre device (9).

9. A system (2) for assessing the safety of a driving style of a terrestrial vehicle (1), the system (2) comprising:
- detection means (12) configured to detect, during a first operating phase of the vehicle (1), at least a quantity associated with an operating condition of a device (3) of the vehicle (1); and
- a control unit (ECU), which is connected to said detection means (12), so as to receive information relative to the detected quantity, said control unit being configured to store a function that associates said quantity with a score expressing a degree of safety of the operating condition, and being further configured to:
a) determine, during the first operating phase, the score on the basis of the detected quantity, through said function; and
b) assess the safety of the driving style, during the first operating phase, on the basis of the determined score,
wherein the detection means (12) are configured to detect a plurality of quantities respectively associated with operating conditions of corresponding devices (3) of the vehicle;
the control unit storing a plurality of functions that respectively associate the quantities with respective scores expressing corresponding degrees of safety of the associated operating conditions;
the control unit (ECU) being further configured to:
- determine the scores on the basis of the respective detected quantities, through the corresponding said functions; and
- assess the safety of the driving style, during the first operating phase, on the basis of each of the determined scores and/or on the basis of an overall score determined as a function of the determined scores, the system being **characterised in that** said quantities are defined by a first portion and a second portion of said quantities; the system comprising:
- diagnostic means (24) coupled to said detection means (12) and configured to diagnose a state of said detection means (12) or of said vehicle (1), wherein said state defines a second operating phase of the vehicle (1), different from said first operating phase, and in which said detection means (12) fail to detect said second portion in a reliable manner;
the control unit (ECU) being coupled to said diagnostic means (24) and further configured to:
- determine, during said second operating phase, a portion of said scores on the basis of the respective quantities of said first portion through the corresponding functions; and
- assess the driving style, during the second operating phase, on the basis of each of the determined scores and/or on the basis of a further overall score determined as a function of the determined scores.

10. The system according to claim 9, wherein said device (3) includes one or more combinations from among:
- a steering device (4);
- a braking device (5);
- an acceleration device (6);
- a stationary braking device (7);
- a safety distance detection device (8);
- an autonomous emergency braking device (AEBS);
- an electronic stability control device (ESP);
- a lane departure warning system (LDW);
- an adaptive cruise control device (ACC); and
- a tyre device (9).

11. A vehicle (1) comprising a system (2) according to claim 9 or claim 10.

## Patentansprüche

1. Verfahren zur Beurteilung der Sicherheit eines Fahrstils eines Landfahrzeugs (1), welches Verfahren die folgenden Schritte umfasst:
- Detektion (202), während einer ersten Betriebsphase des Fahrzeugs (1), zumindest einer Größe, die einem Betriebszustand einer Vorrichtung (3) des Fahrzeugs (1) zugeordnet ist;
- Erstellung einer Funktion, welches diese Größe einer Bewertung zuordnet, welche einen Grad der Sicherheit des Betriebszustands ausdrückt; und
- Bestimmung (203), während der ersten Betriebsphase, der Bewertung auf Grundlage zumindest der detektierten Größe durch diese Funktion;
wobei die Sicherheit des Fahrstils während der ersten Betriebsphase auf Grundlage der bestimmten Bewertung beurteilt wird (205),
wobei
- der Schritt der Detektion (202) die Detektion einer Mehrzahl von Größen umfasst, die jeweils Betriebszuständen entsprechender Vorrichtungen (3) des Fahrzeugs zugeordnet sind;
- der Schritt der Erstellung die Erstellung einer Mehrzahl von Funktionen umfasst, die jeweils die Größen entsprechenden Bewertungen zuordnen, welche entsprechende Grade von Sicherheit der zugeordneten Betriebszustände ausdrücken; und
- der Schritt der Bestimmung (203) die Bestimmung der Bewertungen auf Grundlage der jeweils detektierten Größen durch die entsprechenden Funktionen umfasst;
- wobei die Sicherheit des Fahrstils während der ersten Betriebsphase auf Grundlage von jeder der bestimmten Bewertungen und/oder auf Grundlage einer Gesamtbewertung beurteilt wird, die als eine Funktion der bestimmten Bewertungen bestimmt wird,
welches Verfahren **dadurch gekennzeichnet ist, dass** die Größen durch einen ersten Teil und einen zweiten Teil der Größen definiert sind; welches Verfahren ferner die folgenden Schritte umfasst,
- Bestimmung (201) des Vorliegens einer zweiten Betriebsphase des Fahrzeugs (1), die sich von der ersten Betriebsphase unterscheidet, und in welcher die Detektion des zweiten Teils unzuverlässige Informationen erzeugt;
- Bestimmung (207), während der zweiten Betriebsphase, eines Teils der Bewertungen auf Grundlage der jeweiligen Größen des ersten Teils durch die entsprechenden Funktionen;
wobei die Sicherheit des Fahrstils während der zweiten Betriebsphase auf Grundlage von jeder der bestimmten Bewertungen und/oder auf Grundlage einer weiteren Gesamtbewertung, die als eine Funktion der bestimmten Bewertungen bestimmt wird, beurteilt wird (209).

2. Verfahren gemäß Anspruch 1, bei welchem die Funktion die folgenden Operationen umfasst:
- Zuweisung eines ersten Basiswerts zu der Bewertung;
- Bestimmung (301), ob die detektierte Größe eine erste Beziehung mit einem ersten Grenzwert erfüllt; und
- Aktualisierung (302) der Größe auf einen zweiten Wert, nachdem die erste Beziehung erfüllt wurde;
wobei der zweite Wert einen niedrigeren Grad von Sicherheit ausdrückt als derjenige, der durch den ersten Basiswert ausgedrückt wird.

3. Verfahren gemäß Anspruch 1, bei welchem die Funktion die folgenden Operationen umfasst:
- Zuordnung eines ersten Basiswerts zu der Bewertung;
- Bestimmung (301), ob die detektierte Größe eine zweite Beziehung mit einem zweiten Grenzwert erfüllt;
- Bestimmung von Information bezüglich einer Zeit, die von dem Moment verstrichen ist, in welchem die zweite Beziehung erfüllt ist; und
- Aktualisierung (302) der Bewertung auf einen zweiten Basiswert auf Grundlage der Information;
wobei der zweite Wert einen Grad von Sicherheit ausdrückt, der bezüglich desjenigen, der durch den ersten Basiswert ausgedrückt wird, um so niedriger ist, je länger die verstrichene Zeit ist.

4. Verfahren gemäß Anspruch 3, bei welchem die Zeit bis zu dem Moment verstreicht, in welchem die zweite Beziehung nicht länger erfüllt ist.

5. Verfahren gemäß einem der vorhergehenden Ansprüche, ferner umfassend den Schritt der Detektion einer weiteren Größe, welche die Geschwindigkeit des Fahrzeugs (1) anzeigt, wobei die Bewertung zusätzlich auf Grundlage der weiteren detektierten Größe bestimmt wird.

6. Verfahren gemäß einem der vorhergehenden Ansprüche, ferner umfassend den Schritt der Detektion einer oder mehrerer weiterer Größen, welche einen Zustand der Straße anzeigen, auf welcher das Fahrzeug (1) fährt, wobei die Bewertung zusätzlich auf Grundlage der einen oder mehreren weiteren detektierten Größen bestimmt wird.

7. Verfahren gemäß einem der vorhergehenden Ansprüche, bei welchem die Gesamtbewertung einen Durchschnitt der Bewertungen darstellt.

8. Verfahren gemäß einem der vorhergehenden Ansprüche, bei welchem die Vorrichtung (3) eine oder mehrere Kombinationen aus den folgenden umfasst:
- eine Steuervorrichtung (4);
- eine Bremsvorrichtung (5);
- eine Beschleunigungsvorrichtung (6);
- eine stationäre Bremsvorrichtung (7);
- eine Sicherheitsabstandsdetektionsvorrichtung (8);
- eine autonome Notbremsvorrichtung (AEBS);
- eine elektronische Stabilitätssteuervorrichtung (ESP);
- ein Spurhalte-Warnsystem (LDW);
- eine Abstandsregeltempomat-Vorrichtung (ACC); und
- eine Reifenvorrichtung (9).

9. System (2) zur Beurteilung der Sicherheit eines Fahrstils eines Landfahrzeugs (1), welches System (2) umfasst:
- Detektionsmittel (12), dazu ausgebildet, während einer ersten Betriebsphase des Fahrzeugs (1) zumindest eine Größe zu detektieren, die einem Betriebszustand einer Vorrichtung (3) des Fahrzeugs (1) zugeordnet ist; und
- eine Steuereinheit (ECU), welche mit den Detektionsmitteln (12) verbunden ist, um Informationen bezüglich der detektierten Größe zu empfangen, welche Steuereinheit dazu ausgebildet ist, eine Funktion zu speichern, welche die Größe einer Bewertung zuordnet, die einen Grad von Sicherheit des Betriebszustands ausdrückt, und welche ferner dazu ausgebildet ist,
a) während der ersten Betriebsphase die Bewertung auf Grundlage der detektierten Größe durch die Funktion zu bestimmen; und
b) die Sicherheit des Fahrstils während der ersten Betriebsphase auf Grundlage der bestimmten Bewertung zu beurteilen,
wobei die Detektionsmittel (12) dazu ausgebildet sind, eine Mehrzahl von Größen zu detektieren, die jeweils Betriebszuständen entsprechender Vorrichtungen (3) des Fahrzeugs zugeordnet sind;
wobei die Steuereinheit eine Mehrzahl von Funktionen speichert, die jeweils die Größen entsprechenden Bewertungen zuordnen, welche entsprechende Grade von Sicherheit der zugeordneten Betriebsbedingungen ausdrücken;
wobei die Steuereinheit (ECU) ferner dazu ausgebildet ist,
- die Bewertungen auf Grundlage der jeweils detektierten Größen durch die entsprechenden Funktionen zu bestimmen; und
- die Sicherheit des Fahrstils während der ersten Betriebsphase auf Grundlage von jeder der bestimmten Bewertungen und/oder auf Grundlage einer Gesamtbewertung, die als eine Funktion der bestimmten Bewertungen bestimmt ist, zu bestimmen,
welches System **dadurch gekennzeichnet ist, dass** die Größen durch einen ersten Teil und einen zweiten Teil der Größen definiert sind;
wobei das System umfasst:
- Diagnosemittel (24), die mit den Detektionsmitteln (12) gekoppelt sind und dazu ausgebildet sind, einen Zustand der Detektionsmittel (12) oder des Fahrzeugs (1) zu diagnostizieren, wobei der Zustand eine zweite Betriebsphase des Fahrzeugs (1) definiert, die sich von der ersten Betriebsphase unterscheidet, und in welcher die Detektionsmittel (12) dabei versagen, den zweiten Teil zuverlässig zu bestimmen;
wobei die Steuereinheit (ECU) mit den Diagnosemitteln (24) gekoppelt ist und ferner dazu ausgebildet ist,
- während der zweiten Betriebsphase einen Teil der Bewertungen auf Grundlage der jeweiligen Größen des ersten Teils durch die entsprechenden Funktionen zu bestimmen; und
- den Fahrstil während der zweiten Betriebsphase auf Grundlage von jeder der bestimmten Bewertungen und/oder auf Grundlage einer weiteren Gesamtbewertung, die als Funktion der bestimmten Bewertungen bestimmt wird, zu beurteilen.

10. System gemäß Anspruch 9, bei welchem die Vorrichtung (3) eine oder mehrere Kombinationen aus den folgenden umfasst:
- eine Steuervorrichtung (4);
- eine Bremsvorrichtung (5);
- eine Beschleunigungsvorrichtung (6);
- eine stationäre Bremsvorrichtung (7);
- eine Sicherheitsabstandsdetektionsvorrichtung (8);
- eine autonome Notbremsvorrichtung (AEBS);
- eine elektronische Stabilitätssteuervorrichtung (ESP);
- ein Spurhalte-Warnsystem (LDW);
- eine Abstandsregeltempomat-Vorrichtung (ACC); und
- eine Reifenvorrichtung (9).

11. Fahrzeug (1), umfassend ein System (2) gemäß Anspruch 9 oder Anspruch 10.

## Revendications

1. Procédé d'évaluation de la sécurité d'un style de conduite d'un véhicule (1) terrestre, le procédé comprenant les étapes suivantes :
- détecter (202), au cours d'une première phase de fonctionnement du véhicule (1), au moins une quantité associée à une condition de fonctionnement d'un dispositif (3) du véhicule (1) ;
- établir une fonction qui associe ladite quantité à un score exprimant un degré de sécurité de la condition de fonctionnement ; et
- déterminer (203) le score au cours de ladite première phase de fonctionnement en se basant au moins sur la quantité détectée par le biais de ladite fonction ;
la sécurité du style de conduite étant évaluée (205) au cours de ladite première phase de fonctionnement sur la base du score déterminé,
dans lequel :
- ladite étape de détection (202) comprend de détecter une pluralité de quantités associées respectivement à des conditions de fonctionnement de dispositifs (3) correspondants du véhicule ;
- ladite étape d'établissement comprend d'établir une pluralité de fonctions qui associent respectivement lesdites quantités à des scores respectifs exprimant les degrés de sécurité correspondants des conditions de fonctionnement associées ; et
- ladite étape de détermination (203) comprend de déterminer des scores sur la base des quantités détectées respectives par le biais desdites fonctions correspondantes ;
dans lequel la sécurité du style de conduite est évaluée au cours de ladite première phase de fonctionnement sur la base de chacun des scores déterminés et/ou sur la base d'un score global déterminé en fonction des scores déterminés,
le procédé étant **caractérisé en ce que**
lesdites quantités sont définies par une première partie et une deuxième partie desdites quantités ; le procédé comprenant en outre les étapes suivantes :
- déterminer (201) l'existence d'une deuxième phase de fonctionnement du véhicule (1) différente de ladite première phase de fonctionnement et dans laquelle la détection de ladite deuxième partie produit des informations peu fiables ;
- détecter (206), au cours de ladite deuxième phase de fonctionnement, ladite première partie desdites quantités ;
- déterminer (207), au cours de ladite deuxième phase de fonctionnement, une partie desdits scores sur la base des quantités respectives de ladite première partie par le biais des fonctions correspondantes ;
la sécurité du style de conduite étant évaluée (209) au cours de la deuxième phase de fonctionnement sur la base de chacun des scores déterminés et/ou sur la base d'un score global supplémentaire déterminé en fonction des scores déterminés.

2. Procédé selon la revendication 1, dans lequel ladite fonction comporte les opérations suivantes :
- attribuer une première valeur de base au score ;
- déterminer (301) si la quantité détectée satisfait à une première relation avec un premier seuil ; et
- mettre à jour (302) le score à une deuxième valeur après que la première relation a été satisfaite ;
la deuxième valeur exprimant un degré de sécurité inférieur par rapport à celui exprimé par la première valeur de base.

3. Procédé selon la revendication 1, dans lequel ladite fonction comporte les opérations suivantes :
- attribuer une première valeur de base au score ;
- déterminer (301) si la quantité détectée satisfait à une deuxième relation avec un deuxième seuil ;
- déterminer des informations relatives à un temps écoulé à partir du moment où ladite deuxième relation est satisfaite ; et
- mettre à jour (302) le score à une deuxième valeur de base sur la base desdites informations ;
la deuxième valeur exprimant un degré de sécurité d'autant plus faible, par rapport à celui exprimé par la première valeur de base, que ledit temps écoulé est plus long.

4. Procédé selon la revendication 3, dans lequel ledit temps s'écoule jusqu'au moment où ladite deuxième relation n'est plus satisfaite.

5. Procédé selon l'une des revendications précédentes, comprenant en outre l'étape de détection d'une quantité supplémentaire indicative de la vitesse du véhicule (1), dans lequel le score est également déterminé sur la base de ladite quantité supplémentaire détectée.

6. Procédé selon l'une des revendications précédentes, comprenant en outre l'étape de détection d'une ou plusieurs quantités supplémentaires indicatives d'une condition de la route parcourue par le véhicule (1), dans lequel le score est également déterminé sur la base des une ou plusieurs quantités supplémentaires détectées.

7. Procédé selon l'une des revendications précédentes, dans lequel ledit score global est une moyenne desdits scores.

8. Procédé selon l'une des revendications précédentes, dans lequel ledit dispositif (3) comporte une ou plusieurs combinaisons parmi :
- un dispositif de direction (4) ;
- un dispositif de freinage (5) ;
- un dispositif d'accélération (6) ;
- un dispositif de freinage stationnaire (7) ;
- un dispositif de détection de distance de sécurité (8) ;
- un dispositif de freinage d'urgence autonome (AEBS) ;
- un dispositif de commande électronique de la stabilité (ESP) ;
- un système d'alerte de franchissement de ligne (LDW) ;
- un dispositif régulateur de vitesse et d'espacement (ACC) ; et
- un dispositif de pneu (9).

9. Système (2) pour évaluer la sécurité d'un style de conduite d'un véhicule (1) terrestre, le système (2) comprenant :
- des moyens de détection (12) configurés pour détecter, au cours d'une première phase de fonctionnement du véhicule (1), au moins une quantité associée à une condition de fonctionnement d'un dispositif (3) du véhicule (1) ; et
- une unité de commande (ECU) qui est connectée auxdits moyens de détection (12) de manière à recevoir des informations relatives à la quantité détectée, ladite unité de commande étant configurée pour stocker une fonction qui associe ladite quantité à un score exprimant un degré de sécurité de la condition de fonctionnement, et étant en outre configurée pour :
a) déterminer le score au cours de la première phase de fonctionnement sur la base de la quantité détectée par le biais de ladite fonction ; et
b) évaluer la sécurité du style de conduite au cours de la première phase de fonctionnement sur la base du score déterminé,
dans lequel les moyens de détection (12) sont configurés pour détecter une pluralité de quantités associées respectivement à des conditions de fonctionnement de dispositifs (3) correspondants du véhicule ;
l'unité de commande stockant une pluralité de fonctions qui associent respectivement les quantités à des scores respectifs exprimant les degrés de sécurité correspondants des conditions de fonctionnement associées ;
l'unité de commande (ECU) étant en outre configurée pour :
- déterminer les scores sur la base des quantités détectées respectives par le biais desdites fonctions correspondantes ; et
- évaluer la sécurité du style de conduite, au cours de la première phase de fonctionnement sur la base de chacun des scores déterminés et/ou sur la base d'un score global déterminé en fonction des scores déterminés, le système étant **caractérisé en ce que**
lesdites quantités sont définies par une première partie et une deuxième partie desdites quantités ; le système comprenant :
- des moyens de diagnostic (24) couplés auxdits moyens de détection (12) et configurés pour diagnostiquer un état desdits moyens de détection (12) ou dudit véhicule (1), dans lequel ledit état définit une deuxième phase de fonctionnement du véhicule (1) différente de ladite première phase de fonctionnement et dans laquelle lesdits moyens de détection (12) ne parviennent pas à détecter ladite deuxième partie de manière fiable ;
l'unité de commande (ECU) étant couplée auxdits moyens de diagnostic (24) et étant en outre configurée pour :
- déterminer, au cours de ladite deuxième phase de fonctionnement, une partie desdits scores sur la base des quantités respectives de ladite première partie par le biais des fonctions correspondantes ; et
- évaluer le style de conduite au cours de la deuxième phase de fonctionnement sur la base de chacun des scores déterminés et/ou sur la base d'un score global supplémentaire déterminé en fonction des scores déterminés.

10. Système selon la revendication 9, dans lequel ledit dispositif (3) comporte une ou plusieurs combinaisons parmi :
- un dispositif de direction (4) ;
- un dispositif de freinage (5) ;
- un dispositif d'accélération (6) ;
- un dispositif de freinage stationnaire (7) ;
- un dispositif de détection de distance de sécurité (8) ;
- un dispositif de freinage d'urgence autonome (AEBS) ;
- un dispositif de commande électronique de la stabilité (ESP) ;
- un système d'alerte de franchissement de ligne (LDW) ;
- un dispositif régulateur de vitesse et d'espacement (ACC) ; et
- un dispositif de pneu (9).

11. Véhicule (1) comprenant un système (2) selon la revendication 9 ou la revendication 10.
